# EUROPEAN PATENT SPECIFICATION

(11) **EP 0 667 824 B1**
(45) Date of publication and mention of the grant of the patent: **28.07.1999**
(21) Application number: 93924739.1
(22) Date of filing: 10.11.1993
(51) Int. Cl.: B61B 3/00, A01M 7/00

(54) **WHEEL HEAD AND RAIL ASSEMBLY**
RADKOPF UND SCHIENENVERBINDUNG
ENSEMBLE RAILS ET SUPPORTS DE ROUES

(30) Priority: 10.11.1992 GB 9223505; 17.11.1992 GB 9224105
(43) Date of publication of application: 23.08.1995
(73) Proprietor: Benest Engineering Limited, Jersey, Channel Islands (GB)
(72) Inventor: BENEST, Roger Sidney, St Lawrence, Jersey (GB)
(74) Representative: Archer, Philip Bruce
(86) International application number: PCT/GB93/02316
(87) International publication number: WO 94/11228

(56) References cited:
- WO-A-93/02552
- GB-A- 2 190 343
- GB-A- 2 229 074
- US-A- 3 238 894

## Description

This invention relates to a wheel head and rail assembly and to a corresponding drive system provided thereby, whether including a corresponding source of torque such as a motor or otherwise provided with means for moving the wheel bead lengthwise of the rail assembly.

In this application, references to "drive" refer to the transmission of torque from a source thereof, for example an electric motor, to wheels, or an equivalent thereof, for effecting movement of the wheels, and for example a structure mounted thereon, lengthwise of a surface engaged by the wheels for drive purposes.

An application of the invention is to a mounting and/or drive system for a carriage to be used in an agricultural or horticultural sprayer to provide a mounting for spray heads to be moved lengthwise of a sprayer boom. In such an application, the drive will usually be effected by means of wheels engaging a track.

The invention may also find application to related carriage and/or drive systems including industrial applications generally, particularly those where the carriage or drive have to operate in a hostile environment, and there is required a self-propelled carriage for transportation purposes.

Shortcomings of presently available or published carriage systems for use in the above-mentioned type of situations include limitations on the distance in which the carriage can move, these being imposed by such factors as cable length, in the case of cable drives. Other shortcomings include a lack of stability and susceptibility to hostile environments, general complexity, and a lack of reliability.

There is disclosed in GB-A-2 190 343 an assembly as set forth in features a) to c) of claim 1 hereof. That assembly forms part of a system for driving a caddie cart. In the embodiments of Figs 17 and 18 or 25 and 27, the lateral stability of the assembly is provided by multiple wheel assemblies on both sides of the centre line 101 (in Fig 18). This is because the three wheels in each assembly on each side are disposed in in-line relationship as viewed lengthwise of the rail, whereby the lateral stability is no greater than that of one wheel.

There is disclosed in US-A-3 879 799 (Williams) an assembly as set forth in the pre-characterising portion of claim 1 hereof. That assembly is in the form of a multidirectional suspension system for partitioning panels intended for use in hotels, clubs, convention halls and the like for the temporary subdivision of a large room space into small rooms. Panels for installations of this type are large and heavy. A significant problem with such partitions is in providing for ready movement of the panels through track intersections, right angle turns etc and to avoid wheels dropping into track intersection slots due to their weight. The disclosure refers to only rolling friction being involved in moving the panels along the track, but the actual disclosure with reference to the drawings shows an arrangement in which a wheel or disc 28 has its lower load support frusto-conical side surface 34 resting on a corresponding rollerway surface 38 at one side of the assembly and a wheel or disc 30 having its lower load support frusto-conical side surface 36 resting on a corresponding rollerway surface 40 at the other side. Accordingly, the load-bearing contact between the wheels and the corresponding rails is over the entire radial extent of the relevant portion of each wheel and over substantially the entire width of the corresponding portion of the rail. This arrangement is technically unsatisfactory for driving and other purposes due to the inherent scuffing which would occur between each load-carrying wheel and its co-operating rails surface due to the non-rolling relationship of the wheel to the rail surface. While such a scuffing arrangement may be acceptable for the situation disclosed by Williams relating to suspension systems for partitions, it is not acceptable for a driven assembly. We have identified a need for an ararngement in which the advantages of the contra-rotating wheel assembly are retained while enabling it to have a rolling relationship with its rails whereby a drive input to the wheels may be power-efficiently transferred in a way not disclosed or suggested by Williams. alternately on one rail, and then the other.

By the provision of a contra-rotatable wheel assembly in accordance with certain aspects of the invention, there is provided a mounting and an optional drive which is particularly compact and stable. The carriage and drive is able to traverse the full length of any rail system provided for it. Where a drive is not required, the wheel head enables position adjustment of the carriage, or even of just the wheel head lengthwise of the rails. Means may be provided to control movement of the wheel head along the rails. Such means may comprise a braking assembly whereby the wheel head can move when a pre-determined force or torque is applied thereto, whereby, in use, a structure mounted on the carriage is provided with operating characteristics enabling it to move under certain conditions encountered during use.

Manufacturing costs are relatively low due to the simplicity of the structure. In one embodiment, the wheels and rails are both in the form of mouldings or extrusions.

In addition to the use of the invention to provide a carriage for a sprayer boom, other applications of the invention in agricultural situations include carriages for a controlled weeding implement, a fertiliser placement implement, and a seeding device. Applications outside agriculture include rail-type transport systems.

An embodiment of the invention will now be described by way of example with reference to the accompanying drawings in which:-
Fig 1 shows a vertical section through the boom of a sprayer implement;
Fig 2 shows a plan view of a wheel assembly also seen in Fig 1, the direction of viewing being indicated in Fig 1 by the arrow II; and
Figs 3 and 4 show, respectively, axial and radial views of a modified wheel assembly having a common adjustment axis but with the wheels disposed with their rotation axes offset from each other.

As shown in the drawings, a sprayer boom 10 is of generally triangular cross-sectional shape and comprises lengthwise-extending box sections 12, 14 providing mountings for rails 16, 18 between which a wheel assembly 20 is mounted.

Reference is hereby directed to our co-pending PCT application number PCT/GB92/01356 (reference P51794WO). There is hereby incorporated in this present application the entire disclosure of this prior unpublished application by reference.

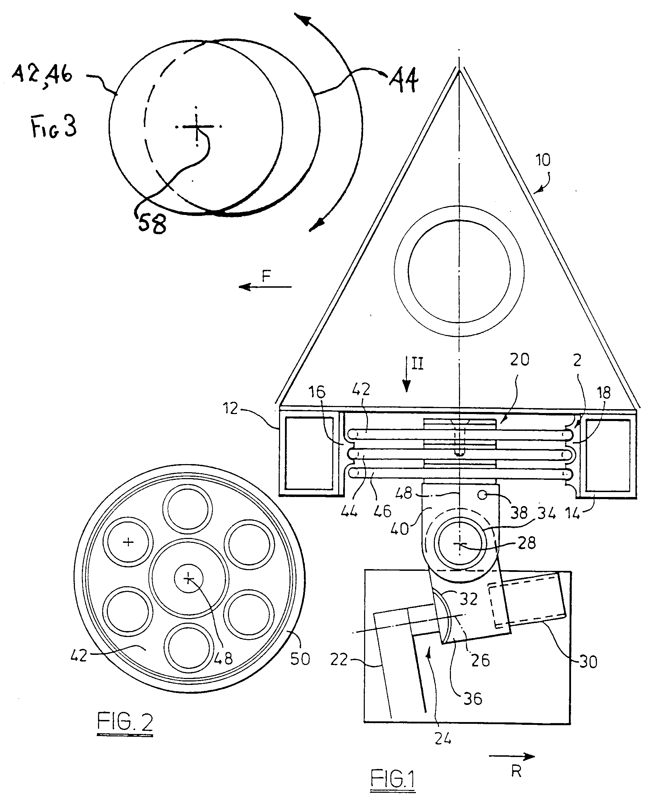

The wheel assembly 20 replaces the carriages disclosed in the prior WO application and provides a mounting for spraying droplegs 22 as described in more detail below. For the function and structure of the droplegs, the boom 10, and other structures, reference is directed to the above-mentioned prior PCT application, and indeed to the earlier PCT application which is therein-mentioned. Suffice it to say for present purposes, that droplegs 22 depend below boom 10 as indicated in Fig 1 and provide a mounting for spray nozzles (not shown). The droplegs are supported on their respective wheel assemblies 20, through universal mountings 24 permitting lateral pivotal movement of the droplegs about respective axes 26, and about a common transverse axis 28 permitting fore and aft pivotal movement. A torsion spring (not shown) mounted on a tubular mounting 30 cooperates with a pair of wavy discs 32 to provide a preferred central attitude with respect to axis 26, as more fully described in the above-mentioned prior PCT application. Likewise, a torsion spring (not shown) wrapped around a tube 34 and acting between a mounting head 36 and a bore 38 in a hub member 40 serves to hold head 36 (and hence its dropleg 22) in a preferred position from which it can be resiliently deflected in the rearward direction R by dynamic forces in use.

Turning now to wheel assembly 20, it will be seen that it comprises three wheel members 42, 44, 46 mounted for rotation about a common axis 48, and each having a rubber tyre 50 for driving engagement with either rail 16 or rail 18, as shown in Fig 1.

As also shown in Fig 1, the rails 16 and 18 have profiled and dimensioned curved inner surfaces 52 for making contact with the complementarily profiled tyre surfaces 54 of the wheel members, as indicated. Thus, upper wheel member 42 and lower wheel member 46 both co-rotate and make rolling contact at 52 with rail member 18, whereas the middle wheel member 44 runs in a clearance groove 56 in rail member 18 and makes contact only with rail member 16. Thus, middle wheel member 44 contra-rotates, in use, with respect to the other two wheel members. Each wheel member makes rolling contact only with one rail member, and at the other side of the wheel member there is clearance. In this way, a compact and axially and radially stable mounting is provided, which is particularly advantageous for a carriage assembly for the boom 10, and like applications.

A drive for the wheel assembly is provided in the form of an electric motor (not shown) mounted directly on the wheel assembly above wheel member 42.

In use, the wheel assembly and the dropleg mounted thereon, readily respond to drive signals given to the motor by its control system, whereby the droplegs are maintained in the precise required position with respect to the length of the boom 10.

Amongst modifications which could be made in the above embodiment while remaining within the scope of the invention are the use of just two wheels in the wheel assembly or more than three. Usually, the wheels will be arranged in alternately contra-rotating relative disposition. Modifications to the rail profiles can be readily envisaged. Greater and lesser clearance between the rails and the wheel members than that shown can likewise be envisaged.

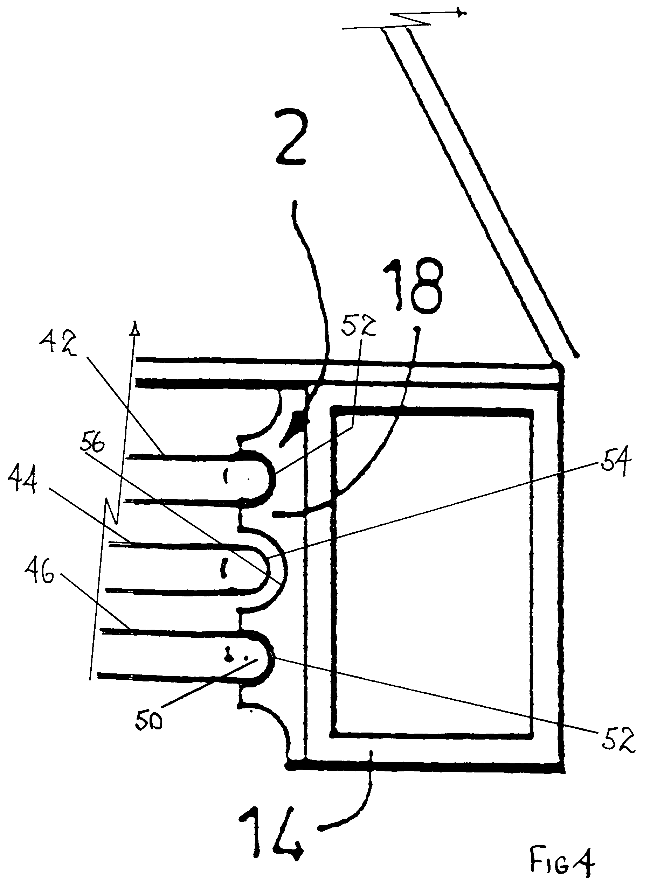

In a further embodiment shown in Fig 3, the wheel assembly is modified by having the three wheels 42, 44, 46 disposed so that their axes of rotation are not coincident, and thus as seen in axial view, the wheels are not in alignment. However, the wheels have a common adjustment axis 58 about which the assembly can be turned to adjust the clearances between the wheels and the respective rails, not shown.

Thus, this embodiment provides a simple means whereby the wheels may be adjusted with respect to the rails. In order to maintain a given chosen state of adjustment, a ratchet (not shown) may be provided, or alternatively a spring device (not shown) may be provided to spring-urge the assembly into contact with the respective rails.

In this embodiment, the bearing assemblies of the three wheels may be secured together with the desired degree of offset between the rotation axes.

The advantage of this embodiment lies in the fact that the tolerances for the relative dispositions of the rails are less critical.

## Claims

1. A wheel head and rail assembly comprising:
a) an assembly (20) of at least two wheels (42,44,46);
b) a pair of spaced rails (16,18);
c) said assembly (20) of wheels being mounted between said rails (16,18) for contra-rotation of said wheels (42,44,46) about respective axes (48) to co-operate with said rails;
d) said wheels (42,44,46) of said assembly being axially offset with respect to each other lengthwise of their respective rotation axes so as to be capable of effecting said contra-rotation; and
e) said wheels being also disposed in overlapping relationship as viewed in the lengthwise direction of their axes (48) and with the rotation axis of each wheel passing through each other wheel;
characterised by
f) a drive for at least one of said wheels; and
g) each of said wheels having a radially outwardly-facing rolling periphery (54) having a curved profile as viewed in radial cross-section for rolling engagement with a complementary surface (52) on its respective one of said rails; and
h) each of said rails (16,18) being adapted to co-operate with its respective wheel by being formed with a radially inwardly-facing formation (52) having a curved profile as viewed in radial cross-section, complementary to said curved profile (54) of said wheel and with which said rolling periphery of said wheel cooperates, whereby said wheel is located against radially outward movement by said rolling co-operation of said rolling periphery (54) with said radially inwardly facing formation (52) of said rail (16,18), and said wheel is located against movement in both axial directions by co-operation of said complementary curved profiles of said wheel and said rail.

2. A wheel head (20) for a wheel head and rail assembly comprising :
a) an assembly (20) of at least two wheels (42,44,46) to co-operate with a pair of spaced rails (16,18);
b) said assembly of wheels (42,44,46) being adapted to be mounted between said rails (16,18) for contra-rotation of said wheels about respective axes (48) to co-operate with said rails;
c) said wheels (42,44,46) of said assembly being axially offset with respect to each other lengthwise of their respective rotation (48) axes so as to be capable of effecting said contra-rotation; and
d) said wheels being also disposed in overlapping relationship as viewed in the lengthwise direction of their axes (48) and with the rotation axis of each wheel passing through each other wheel; characterised by
e) each of said wheels (42,44,46) having a radially outwardly-facing rolling periphery having a curved profile as viewed in radial cross-section for rolling engagement with a complementary surface (52) on its respective one of said rails (16,18); and
f) each of said rails being adapted to co-operate with its respective wheel by being formed with a radially inwardly-facing formation having a curved profile as viewed in radial cross-section, complementary to said curved profile of said wheel and with which said rolling periphery of said wheel co-operates, whereby said wheel is located against radially outward movement by said rolling cooperation of said rolling periphery with said radially inwardly facing formation of said rail, and said wheel being located against movement in both axial directions by co-operation of said complementary curved profiles of said wheel and said rail.

3. A wheel head and nail assembly according to claim 1 characterised by said assembly comprising two co-axial co-rotational outer wheels (42,46) and a contra-rotatable central wheel (44).

4. A wheel head and nail assembly according to claim 1 or claim 3 characterised by said axes (48) of rotation of said wheels (42,44,46) being coincident.

5. A wheel head and nail assembly according to any one of claims 1, 3 and 4 characterised by torque control means for said wheels.

6. A wheel head and nail assembly according to any one of claims 1 and 3 to 5 characterised by said wheels comprising tyres for rolling contact with said rails.

7. A wheel head and nail assembly according to claim 6 characterised in that tyre being removable from said wheels.

8. A wheel head and nail assembly according to any one of claims 1 and 3 and 5 to 7 characterised by said wheels (16,18) having spaced rotation axes and an adjustment device being provided to position-adjust said wheels about a common adjustment axis (58).

9. A carriage for a sprayer boom characterised by an assembly according to any one of claims 1 and 3 to 8.

10. A sprayer boom comprising a carriage according to claim 9.

## Patentansprüche

1. Radkopf-Schienen-Anordnung mit:
a) einer Anordnung (20) mindestens zweier Räder (42, 44, 46);
b) einem Paar gegenseitig beabstandeter Schienen (16, 18);
c) Haltung der Anordnung (20) der Räder zwischen den Schienen (16, 18) zur gegensinnigen Drehung der Räder (42, 44, 46) jeweils um eine Achse (48) anliegend an den Schienen;
d) axialem Versatz der Räder (42, 44, 46) der Anordnung relativ zueinander in Längsrichtung ihrer jeweiligen Drehachse zwecks gegensinniger Drehung; und
e) Anordnung der Räder auch überlappend, in Längsrichtung ihrer Achsen (48) gesehen, wobei die Drehachse eines jeden Rades durch jedes andere Rad verläuft;
**gekennzeichnet** durch
f) einen Antrieb für mindestens eines der Räder; und
g) einen radial außenliegenden Abwälzumfang (54) eines jeden Rades mit gekrümmtem Profil, im radialen Querschnitt gesehen, zum Abwälzen an einer komplementären Fläche (52) der jeweils zugeordneten Schiene; und
h) Eignung einer jeden Schiene (16, 18) zum Zusammenwirken mit dem jeweiligen Rad durch eine radial nach innen gerichtete Ausbildung (52) mit gekrümmtem Profil, gesehen im radialen Querschnitt, komplementär zu dem gekrümmten Profil (54) des Rades, mit der der Abwälzumfang des Rades in Wechselwirkung steht, wodurch das Rad gegen radial nach außen gerichtete Bewegung durch Abwälzen des Abwälzumfangs (54) an der radial nach innen gerichteten Ausbildung (52) der Schiene (16, 18) gesichert ist und das Rad gegen Bewegung in beiden axialen Richtungen durch Abwälzen der komplementären gekrümmten Profile des Rades und der Schiene gesichert ist.

2. Radkopf (20) für eine Radkopf-Schienen-Anordnung, mit:
a) einer Anordnung (20) mindestens zweier Räder (42, 44, 46) zum Abwälzen an einem Paar gegenseitig beabstandeter Schienen (16, 18);
b) Eignung der Anordnung der Räder (42, 44, 46) zum Halten zwischen den Schienen (16, 18) zwecks gegensinniger Drehung der Räder um jeweilige Achsen (48) beim Abwälzen an den Schienen;
c) axialem Versatz der Räder (42, 44, 46) der Anordnung relativ zueinander in Längsrichtung ihrer jeweiligen Drehachse (48) zwecks gegensinniger Drehung; und
d) Anordnung der Räder auch überlappend, in Längsrichtung ihrer Achsen (48) gesehen, wobei die Drehachse eines jeden Rades durch jedes andere Rad verläuft;
**gekennzeichnet** durch
e) einen radial außenliegenden Abwälzumfang eines jeden Rades (42, 44, 46) mit gekrümmtem Profil, im radialen Querschnitt gesehen, zum Abwälzen an einer komplementären Fläche (52) der jeweils zugeordneten Schiene (16, 18); und
f) Eignung einer jeden Schiene zum Zusammenwirken mit dem jeweiligen Rad durch eine radial nach innen gerichtete Ausbildung mit gekrümmtem Profil, gesehen im radialen Querschnitt, komplementär zu dem gekrümmten Profil des Rades, mit der der Abwälzumfang des Rades in Wechselwirkung steht, wodurch das Rad gegen radial nach außen gerichtete Bewegung durch Abwälzen des Abwälzumfangs an der radial nach innen gerichteten Ausbildung der Schiene gesichert ist und das Rad gegen Bewegung in beiden axialen Richtungen durch Abwälzen der komplementären gekrümmten Profile des Rades und der Schiene gesichert ist.

3. Radkopf-Schienen-Anordnung nach Anspruch 1, dadurch **gekennzeichnet**, daß die Anordnung zwei koaxiale, gleichsinnig drehbare Außenräder (42, 46) und ein gegensinnig drehbares mittleres Rad (44) enthält.

4. Radkopf-Schienen-Anordnung nach Anspruch 1 oder 3, dadurch **gekennzeichnet,** daß die Drehachsen (48) der Räder (42, 44, 46) koinzident sind.

5. Radkopf-Schienen-Anordnung nach Anspruch 1, 3 und 4, **gekennzeichnet** durch Drehmoment-Steuermittel für die Räder.

6. Radkopf-Schienen-Anordnung nach einem der Ansprüche 1 und 3 bis 5, dadurch **gekennzeichnet**, daß die Räder Reifen zum Abwälzkontakt an den Schienen haben.

7. Radkopf-Schienen-Anordnung nach Anspruch 6, dadurch **gekennzeichnet**, daß die Reifen von den Rädern abnehmbar sind.

8. Radkopf-Schienen-Anordnung nach einem der Ansprüche 1 und 3 und 5 bis 7, dadurch **gekennzeichnet**, daß die Räder (16, 18) gegenseitig beabstandete Drehachsen haben, und daß eine Einstellvorrichtung zum Einstellen der Radpositionen bezüglich einer gemeinsamen Einstellachse (58) vorgesehen ist.

9. Schlitten für einen Sprühbalken, **gekennzeichnet** durch eine Anordnung nach einem der Ansprüche 1 und 3 bis 8.

10. Sprühbalken mit einem Schlitten nach Anspruch 9.

## Revendications

1. Ensemble porte-roue et rail comprenant :
a) un ensemble (20) constitué d'au moins deux roues (42, 44, 46) ;
b) une paire de rails espacés (16, 18) ;
c) ledit ensemble (20) de roues étant monté entre lesdits rails (16, 18) pour obtenir une contrarotation desdites roues (42, 44, 46) autour d'axes respectifs (48) pour coopérer avec lesdits rails ;
d) lesdites roues (42, 44, 46) dudit ensemble étant axialement décalées l'une par rapport à l'autre dans le sens de la longueur de leurs axes de rotation respectifs afin d'être en mesure d'effectuer ladite contrarotation ; et
e) lesdites roues étant également disposées en relation de chevauchement quand on les voit dans le sens de la longueur de leurs axes (48) et l'axe de rotation de chaque roue passant à travers chaque autre roue ;
caractérisé par
f) un entraînement pour au moins l'une desdites roues ; et
g) chacune desdites roues ayant une périphérie de roulement radialement tournée vers l'extérieur (54) dotée d'un profil incurvé quand on le voit en coupe transversale radiale pour une mise en prise par roulement avec une surface complémentaire (52) sur un rail respectif desdits rails ; et
h) chacun desdits rails (16, 18) étant adapté pour coopérer avec sa roue respective en étant pourvue d'une formation radialement tournée vers l'intérieur (52) ayant un profil incurvé quand on le voit en coupe transversale radiale, complémentaire audit profil incurvé (54) de ladite roue et avec lequel coopère ladite périphérie de roulement de ladite roue, de telle sorte que ladite roue soit placée pour venir à l'encontre d'un mouvement radialement vers l'extérieur par ladite coopération par roulement de ladite périphérie de roulement (54) avec ladite formation radialement tournée vers l'intérieur (52) dudit rail (16, 18), et ladite roue est située à l'encontre du mouvement dans les deux directions axiales par coopération desdits profils incurvés complémentaires de ladite roue et dudit rail.

2. Porte-roue (20) destiné à un ensemble porte-roue et rail, comprenant :
a) un ensemble (20) constitué d'au moins deux roues (42, 44, 46) destiné à coopérer avec une paire de rails espacés (16, 18) ;
b) ledit ensemble de roues (42, 44, 46) étant adapté pour être monté entre lesdits rails (16, 18) pour permettre la contrarotation desdites roues autour d'axes respectifs (48) pour coopérer avec lesdits rails ;
c) lesdites roues (42, 44, 46) dudit ensemble étant axialement décalées l'une par rapport à l'autre dans le sens de la longueur de leurs axes de rotation respectifs (40) afin d'être en mesure d'effectuer ladite contrarotation ; et
d) lesdites roues étant également disposées en relation de chevauchement quand on les voit dans le sens de la longueur de leurs axes (48) et l'axe de rotation de chaque roue passant à travers chaque autre roue ;
caractérisé par
e) chacune desdites roues (42, 44, 46) ayant une périphérie de roulement radialement tournée vers l'extérieur (54) dotée d'un profil incurvé quand on le voit en coupe transversale radiale pour une mise en prise par roulement avec une surface complémentaire (52) sur son rail respectif desdits rails (16, 18) ; et
f) chacun desdits rails étant adapté pour coopérer avec sa roue respective en étant pourvu d'une formation radialement tournée vers l'intérieur ayant un profil incurvé quand on le voit en coupe transversale radiale, complémentaire audit profil incurvé de ladite roue et avec lequel coopère ladite périphérie de roulement de ladite roue, de telle sorte que ladite roue soit placée pour venir à l'encontre d'un mouvement radialement vers l'extérieur par ladite coopération par roulement de ladite périphérie de roulement avec ladite formation radialement tournée vers l'intérieur dudit rail, et ladite roue est située à l'encontre du mouvement dans les deux directions axiales par coopération desdits profils incurvés complémentaires de ladite roue et dudit rail.

3. Ensemble porte-roue et rail selon la revendication 1, caractérisé en ce que ledit ensemble comprend deux roues extérieures coaxiales et corotatives et une roue centrale contrarotative (44).

4. Ensemble porte-roue et rail selon la revendication 1 ou la revendication 3, caractérisé en ce que lesdits axes (48) de rotation desdites roues (42, 44, 46) sont coïncidents.

5. Ensemble porte-roue et rail selon l'une quelconque des revendications 1, 3 et 4, caractérisé par des moyens de commande de couple pour lesdites roues.

6. Ensemble porte-roue et rail selon l'une quelconque des revendications 1 et 3 à 5, caractérisé en ce que lesdites roues comprennent des bandages pour venir en contact par roulement avec lesdits rails.

7. Ensemble porte-roue et rail selon la revendication 6, caractérisé en ce que lesdits bandages sont amovibles par rapport auxdites roues.

8. Ensemble porte-roue selon l'une quelconque des revendications 1 à 3, et 5 à 7, caractérisé en ce que lesdites roues (16, 18) ont des axes de rotation espacés et un dispositif de réglage est prévu pour régler en position lesdites roues autour d'un axe de réglage commun (58).

9. Chariot pour rampe de pulvérisation caractérisé par un ensemble selon l'une quelconque des revendications 1 et 3 à 8.

10. Rampe de pulvérisation comprenant un chariot selon la revendication 9.
